# EUROPÄISCHE PATENTSCHRIFT

(11) **EP 3 441 619 B1**
(45) Veröffentlichungstag und Bekanntmachung des Hinweises auf die Patenterteilung: **01.11.2023**
(21) Anmeldenummer: 17185365.8
(22) Anmeldetag: 08.08.2017
(51) Int. Cl.: F04D 29/12, F16J 15/34, F04D 29/42

(54) **KREISELPUMPE**
CENTRIFUGAL PUMP
POMPE CENTRIFUGE

(43) Veröffentlichungstag der Anmeldung: 13.02.2019
(73) Patentinhaber: Grundfos Holding A/S, 8850 Bjerringbro (DK)
(72) Erfinder: Svarre, Erik Bundesen, 8850 Bjerringbro (DK); Nielsen, John Frigård, 8990 Fårup (DK); Skov, Lars, 8860 Ulstrup (DK)
(74) Vertreter: Patentanwälte Vollmann Hemmer Lindfeld Partnerschaft mbB

(56) Entgegenhaltungen:
- WO-A-2012/056650
- WO-A1-2013/143446
- US-A- 4 538 821
- US-A1- 2002 125 648

## Beschreibung

Die Erfindung betrifft eine ein- oder mehrstufige Kreiselpumpe mit den im Oberbegriff des Anspruchs 1 angegebenen Merkmalen sowie eine Gleitringpatronendichtung für eine solche Kreiselpumpe gemäß den im Oberbegriff des Anspruchs 17 angegebenen Merkmalen.

Bei Kreiselpumpen zählt es zum Stand der Technik, das druckseitige Ende der Welle, auf welchem ein oder mehrere Kreiselräder sitzen, gegenüber dem Pumpengehäuse durch eine Gleitringdichtungsanordnung abzudichten. Eine solche Dichtungsanordnung weist einen mit der Welle mit rotierenden Gleitring sowie einen am Gehäuse fest angeordneten Gegengleitring auf, deren Gleitflächen einen Dichtspalt bilden, der beim Betrieb der Pumpe in der Regel durch das Fördermedium der Pumpe flüssigkeitsgeschmiert ist. Gleitring und Gegengleitring sind im Übrigen über Dichtringe gegenüber der Welle bzw. dem Pumpengehäuse abgedichtet. Dabei ist einer der Ringe der Gleitringdichtung axial verschiebbar angeordnet und federkraftbeaufschlagt, um den Dichtspalt möglichst geschlossen zu halten und damit die Dichtfunktion zu gewährleisten. Um im Falle eines Defekts der Dichtung nicht die gesamte Pumpe demontieren zu müssen, zählt es zum Stand der Technik, eine solche Dichtungsanordnung als Gleitringpatronendichtung auszubilden, dabei ist eine Hülse vorgesehen, welche die Welle zumindest im Bereich der Gehäuseöffnung umgibt und die mittels einer an der Außenseite der Hülse angeordneten Klemmvorrichtung lösbar aber drehfest mit der Welle verbunden ist. Derartige Gleitringpatronendichtungen zählen heutzutage bei Pumpen zum Stand der Technik, und sind zum Beispiel aus WO 2013/143446 A1 bekannt. Dort sitzt auf einer Hülse eine Klemmvorrichtung, die aus zwei gegenläufig konischen Ringen besteht, die über Schrauben axial miteinander verspannt werden und somit die Hülse kraftschlüssig auf der Welle festlegen. Die Hülse ist gegenüber der Welle mittels O-Ringen abgedichtet.

Nachteilig bei dieser Befestigung ist, dass das Aufbringen einer definierten Spannkraft, die zwischen Hülse und Welle wirkt, konstruktionsbedingt schwierig ist, da weder die miteinander in Verbindung stehenden Flächen noch die darauf wirkenden Kräfte definiert sind.

Insoweit günstiger ist die aus WO 2012/056650 A1 bekannte Gleitringdichtungseinheit, die allerdings nicht als Patronendichtung sondern als hälftig geteilte Dichtungsanordnung ausgebildet ist, bei der die Dichtungsteile durch Klemmkräfte, die durch Verschraubungen der Dichtungshälften erzeugt werden, und formschlüssige Eingriffe von radial angeordneten Madenschrauben auf der Welle gehalten werden.

Nachteilig bei dieser Anordnung ist, dass beim Austausch der Patronendichtung die in der Welle durch die Spitzen der Schrauben gebildeten Löcher durch Polieren bearbeitet werden müssen, damit die sonst vorhandenen scharfen Kanten nicht den zwischen Hülse und Welle vorgesehenen O-Ring beim Einbau beschädigen, welcher beim Auswechseln der Patrone über diesen Bereich geschoben werden muss. Ein weiterer Nachteil ist, dass eine große Sorgfalt bei der Montage erforderlich ist, um sicherzustellen, dass die Madenschrauben alle gleich tief in die Welle eindringen und die Hülse zur Welle zentriert angeordnet ist.

Diese Nachteile weist auch die aus US 2002/0125648 A1 bekannte Gleitringpatronendichtung auf. Insoweit günstiger ist die aus US 4,538,821 bekannte Dichtungsanordnung, bei welcher vier radiale Spannschrauben vorgesehen sind, welche Hülsenabschnitte an die Welle andrücken. Diese Anordnung benötigt jedoch axiale Einschnitte in der Hülse was nachteilig ist.

Ausgehend von dem einleitend benannten Stand der Technik liegt der Erfindung die Aufgabe zugrunde, eine gattungsgemäße Kreiselpumpe so auszubilden, dass die vorgenannten Nachteile nicht auftreten und hierfür eine entsprechend ausgebildete Gleitringpatronendichtung zur Verfügung zu stellen.

Diese Aufgabe wird durch eine Kreiselpumpe mit den in Anspruch 1 angegebenen Merkmalen gelöst, eine Gleitringpatronendichtung für diese Pumpe ist durch die Merkmale des Anspruchs 17 gegeben. Vorteilhafte Ausgestaltungen ergeben sich aus den Unteransprüchen, der nachfolgenden Beschreibung und den Zeichnungen.

Die erfindungsgemäße ein- oder mehrstufige Kreiselpumpe weist ein Pumpengehäuse mit einer drehbar darin angeordneten Welle auf, auf der mindestens ein Kreiselrad zur Flüssigkeitsförderung drehfest angeordnet ist. Die Kreiselpumpe weist eine Gleitringpatronendichtung auf, die zwischen der Welle und einer Öffnung des Pumpengehäuses, durch welche die Welle hindurchgeführt ist, angeordnet ist. Die Gleitringpatronendichtung weist eine Hülse auf, welche die Welle zumindest im Bereich der Öffnung umgibt und die mittels einer an der Außenseite der Hülse angeordneten Klemmvorrichtung über Klemmmittel lösbar und drehfest mit der Welle verbunden ist. Dabei ist vorgesehen, dass das oder die Klemmmittel der Klemmvorrichtung nur an der Außenseite der Hülse angreifen, und zwar derart, dass die Hülse ausschließlich kraftschlüssig mit der Welle verbunden ist.

Grundgedanke ist es somit, eine Klemmvorrichtung mit Klemmmitteln an der Außenseite der Hülse vorzusehen und die Hülse durch Klemmen auf der Welle festzulegen, also so, dass die Hülse ausschließlich kraftschlüssig mit der Welle verbunden ist und die Hülse nicht, durch Klemmmittel durchsetzt wird bzw. die Klemmmittel unmittelbar an der Welle angreifen. Dadurch dass die Klemmmittel an der Außenseilte der Hülse angreifen, also nur mittelbar auf die Welle einwirken, bleibt die Oberfläche der Welle unbeschädigt, so dass auch nach Auswechseln der Gleitrindpatronendichtung der O-Ring zwischen Hülse und Welle längs der Welle verschoben werden kann, ohne dass dieser in seiner Oberfläche und somit in seiner Dichtwirkung beschädigt wird. Da die Klemmmittel nur an der Außenseite der Hülse angreifen, ist eine zentrierte Befestigung der Hülse auf der Welle einfach zu realisieren.

Die vorliegende Erfindung ist bevorzugt für ein- oder mehrstufige Kreiselpumpen der Inline-Bauart mit vertikal angeordneter Drehachse anwendbar, hierdrauf jedoch nicht beschränkt

Besonders vorteilhaft ist es, wenn die Klemmvorrichtung lösbar mit der Hülse verbunden ist, wie dies in einer Weiterbildung der Erfindung vorgesehen ist. Die lösbare Verbindung der Klemmvorrichtung mit der Hülse schafft die Grundvoraussetzung, die Patronendichtung demontieren zu können, so dass es hierdurch möglich ist, gegebenenfalls verschlissene Gleitringe, die Feder oder andere Bauteile der Gleitringpatronendichtung auszutauschen, um diese Bauteile wieder in Stand zu setzen bzw. zu ersetzen. Es wird dadurch auch ermöglicht, die Ursache für eine etwaige Leckage zu untersuchen, da die Bauteile der Gleitringpatronendichtung für den Ausbau nicht zerschnitten werden müssen.

Gemäß der Erfindung weist die Klemmvorrichtung mindestens zwei, die Hülse abschnittsweise umgebende Klemmbauteile auf, die über vorzugsweise tangential oder parallel dazu angeordnete Schrauben derart miteinander verbunden sind, dass durch Anziehen der Schrauben über die Klemmbauteile auf die Hülse wirkende Klemmkräfte aufgebracht werden. Die Anordnung von mindestens zwei Klemmbauteilen ist im Hinblick auf die Zentrierung der Klemmvorrichtung zur Welle zweckmäßig

Die Schraubverbindung zwischen benachbarten Klemmbauteilen ist vorteilhaft so ausgelegt, dass die Längsachse der Schraube senkrecht zur einer Teilungsebene der zu verbindenden Klemmbauteile angeordnet ist, wobei es sich bei dieser Teilungsebene vorzugsweise um eine radiale Teilungsebene handelt.

Fertigungstechnisch und montagetechnisch von besonderem Vorteil ist es, wenn gemäß einer Weiterbildung der Erfindung die vorzugsweise zwei Klemmbauteile identisch ausgebildet sind. Eine solche Ausbildung kann jedoch auch realisiert werden, wenn drei oder mehr Klemmbauteile vorgesehen sind. Dies verringert die Fertigungs- und Lagerhaltungskosten und vereinfacht die Montage, da sichergestellt ist, dass immer nur eine Sorte von Klemmbauteilen verbaubar ist.

Dabei ist gemäß der Erfindung vorgesehen, dass jedes Klemmbauteil mindestens eine zur Anlage an der Hülse bestimmte Klemmbacke aufweist, die vorzugsweise an ihrer Innenseite so ausgebildet ist, dass sie an die Außenkontur der Hülse und/oder der Welle angepasst ist. Dann kann entweder eine weitgehend gleichmäßige Belastung über den gesamten Umfang der Hülse erfolgen, wodurch eine entsprechend großflächige Auflage der Klemmbacken möglich ist, oder eine Deformierung der Hülse derart erfolgen, dass der Kraftschluss zwischen Hülse und Welle nur über begrenzte Kantaktbereiche der Hülse vermittelt wird, wodurch höhere Anpressdrücke zwischen Hülse und Welle erzielt werden können, ohne die Welle dabei zu beschädigen.

Die Hülse ist dabei vorzugsweise durch die Klemmbacken verformbar, sodass sich die Innenkontur der Hülse zumindest teilweise an die Außenkontur der Welle anschmiegt. Dadurch ist die Innenkontur der Hülse im Querschnitt nicht mehr exakt kreisförmig, sondern bildet umfangseitig nur dort an die Außenkontur der Welle angeschmiegte begrenzte Kantaktbereiche der Hülse zur Vermittlung des Kraftschlusses mit der Welle, wo die Klemmbacken von außen auf die Hülse wirken.

Vorzugsweise weist die Hülse einen ersten axialen Abschnitt und einen zweiten axialen Abschnitt auf, wobei die Klemmmittel der Klemmvorrichtung nur an der Außenkontur des ersten axialen Abschnitts der Hülse angreifen. Dadurch kann das bekannte Design der Gleitringpatronendichtungen im Wesentlichen in vielen Teilen unverändert bleiben, wobei die Hülse um den ersten axialen Abschnitt gegenüber dem bekannten Design verlängert ist, um eine Angriffsfläche für die den ersten axialen Abschnitt umgreifenden Klemmmittel der Klemmvorrichtung zu bilden. Der erste axiale Abschnitt kann dabei zumindest an dem vom zweiten axialen Abschnitt abgewandten Ende eine etwas (z.B. 1-10%) aufgeweitete Innenkontur aufweisen, um den Einsatz der Welle zu erleichtern.

Gemäß einer vorteilhaften Weiterbildung der Erfindung weist jedes Klemmbauteil eine von der Hülse beabstandete Führungsfläche auf, die mit einer am benachbarten Klemmbauteil angeordneten Gegenführungsfläche in Wirkverbindung steht, wobei die Führungsflächen in einer Ebene liegen, die parallel zur Mittellängsachse der nächst benachbarten Schraube, welche ein Klemmbauteil mit dem benachbarten Klemmbauteil verbindet, und/oder parallel zu einer Tangente zur Hülse oder in einem spitzen Winkel vorzugsweise in einem Winkel von bis zu 3° dazu liegt. Diese Führungs- und Gegenführungsflächen stellen sicher, dass beim Anziehen der Schraubverbindung eine definierte Bewegung der Klemmbacken zueinander und zur Hülse erfolgt und dass insbesondere keine Querkräfte auf die Schraube/Schrauben wirken. Die Anordnung der Führungsflächen im spitzen Winkel von bis zu 3° zur Längsachse einer Schraube, welche ein Klemmbauteil mit dem benachbarten Klemmbauteil verbindet, hat den Vorteil einer zusätzlichen Klemmwirkung in Querrichtung zur Schraubenachse, wobei durch die vorgenannten flachen Winkel vergleichsweise große Kräfte aufgebracht werden können.

Bevorzugt ist die Anordnung und Ausbildung der Klemmbauteile so, dass die Führungsflächen und die Gegenführungsflächen jeweils zwischen einer zwei Klemmbauteile miteinander verbindenden Schraube und dem Außenumfang der Hülse angeordnet ist. Eine solche Konstruktion ist raumsparend und effektiv, da die Führung hülsennah erfolgt und somit in ihrer Wirkung vergleichsweise steife Klemmbauteile entstehen.

Gemäß einer alternativen Ausgestaltung der Erfindung können eine Führungsfläche und eine Gegenführungsfläche jeweils an einem Führungszapfen und einer den Zapfen aufnehmende Ausnehmung gebildet sein. Die Führungsfläche erstreckt sich dann vorteilhaft über den gesamten Außenumfang des Zapfens, die Gegenführungsfläche um den gesamten Innenumfang der Ausnehmung oder gegebenenfalls auch nur Teile der Oberflächen von Zapfen und Ausnehmungen. Eine solche Anordnung ist insbesondere beim Vorsehen von zwei Klemmbauteilen vorteilhaft, die vorzugsweise identisch ausgebildet sind, dann ist an jedem Klemmbauteil ein Zapfen und um etwa 180° bezogen auf die Wellenachse versetzt eine Ausnehmung vorgesehen, welche formschlüssig ineinandergreifen, so dass die Klemmbauteile die Hülse vollumfänglich umschließen.

Um einerseits eine ausreichende Klemmwirkung zu erreichen, welche die Hülse vorzugsweise nur elastisch verformt und kraftschlüssig an die Welle anlegt, andererseits jedoch eine ausreichende Klemmkraft aufzubringen, ist es zweckmäßig, wenn sich eine Klemmbacke nur über einen vergleichsweise kleinen Umfangswinkel der Hülse erstreckt, und zwar zwischen 30° und 50°, vorzugsweise zwischen 40° und 45°. Die angegebenen Werte sind natürlich abhängig von der Anzahl der über den Umfang angeordneten Klemmbacken sowie deren Breitenerstreckung. Die vorgenannten Winkelangaben haben sich für zwei über den Umfang verteilte Klemmbacken als vorteilhaft erwiesen, dabei ist es besonders vorteilhaft, wenn ein Klemmbauteil neben der sich über den obigen Umfangswinkel erstreckenden Klemmbacken eine weitere Anlagefläche aufweist, die zur Anlage des Klemmbauteils auf der Hülse vorgesehen ist und welche umfangsmäßig beabstandet von der Klemmbacke ist. Die weitere Anlagefläche dient vorzugsweise dazu, die Zentrierung beim Zusammenbau zu vereinfachen, d.h. die Anlage der weiteren Anlagefläche auf der Hülse kann im Wesentlichen ohne Kraftschluss oder nur kurzzeitig während des Zusammenbaus erfolgen.

Vorteilhaft ist zwischen der Klemmbacke und der weiteren Anlagefläche desselben Klemmbauteils ein beabstandeter Bereich vorgesehen, der sich über einen Winkel zwischen 80° und 110°, bezogen auf den Umfang der Hülse, erstreckt. Zwischen Klemmbacke und der weiteren Anlagefläche des Klemmbauteils ist also vorteilhaft ein Bereich zwischen 80° und 110° vorgesehen, der beabstandet zur Hülse ist.

Dabei ist vorteilhaft die mindestens eine Anlagefläche einer Klemmbacke benachbart zur einer Führungsfläche bzw. Gegenführungsfläche desselben Klemmbauteils, und zwar von dieser abgewandt angeordnet. Diese Anordnung gewährleistet, dass die Schraubverbindung zwischen benachbarten Klemmbacken weitgehend frei von Querkräften verbleibt.

Gemäß der Erfindung ist somit vorteilhaft vorgesehen, dass die Anordnung der Klemmbacken umfangsmäßig so erfolgt, dass die auf die Hülse wirkenden Klemmkräfte in Querrichtung zu der Längsachse der verbindenden Schraube größer als die in Längsrichtung oder parallel zur Schraube gerichteten Klemmkräfte sind.

Die erfindungsgemäße Gleitringpatronendichtung für eine Kreiselpumpe der vorgenannten Art, weist einen ersten Gleitring auf, der zur drehfesten Anordnung nahe einer Gehäuseöffnung des Pumpengehäuses vorgesehen ist und der eine axiale Gleit- und Dichtfläche aufweist, die an einer axialen Gleit- und Dichtfläche eines zweiten Gleitrings anliegt, welcher zur drehfesten Anordnung an einer die Gehäuseöffnung durchsetzenden Welle vorgesehen ist. Die Gleitringpatronen dichtung weist eine Hülse auf und eine an der Hülse angeordnete Klemmvorrichtung mit Klemmmitteln, sowie Federmittel zur axialen Kraftbeaufschlagung der Gleit- und Dichtflächen zueinander sowie Dichtmittel zur Abdichtung der Hülse gegenüber der Welle und zur gehäuseseitigen Abdichtung. Dabei ist die Gleitringpatronendichtung so ausgebildet, dass das oder die Klemmmittel der Klemmvorrichtung nur an der Außenseite der Hülse angreifen, und zwar derart, dass die Hülse nur kraftschlüssig mit der Welle verbunden ist. Diese Anordnung ist besonders vorteilhaft, da durch die Festlegung der Gleitringpatronendichtung an der Welle mittels der Klemmvorrichtung keinerlei Beeinträchtigung der Oberfläche der Welle eintritt, so dass beim Auswechseln der Dichtung der typischerweise zwischen Hülse und Welle anzuordnende Dichtring im Form eines O-Rings aufgeschoben werden kann, ohne dass die Gefahr einer Beschädigung besteht.

Gemäß der Erfindung weist die Klemmvorrichtung mindestens zwei, die Hülse abschnittsweise umgebende Klemmbauteile auf, die über Schrauben derart miteinander verbunden sind, dass durch Anziehen der Schrauben über die Klemmbauteile auf die Hülse wirkende Klemmkräfte aufgebracht werden, wobei jedes Klemmbauteil mindestens eine zur Anlage an der Hülse bestimmte Klemmbacke aufweist. Dabei ist die Klemmvorrichtung vorteilhaft lösbar an der Hülse angeordnet, so dass die Möglichkeit der Demontage der Gleitringpatronendichtung besteht, so dass einzelne Bauteile dieser Dichtung ausgetauscht, instand gesetzt oder ersetzt werden können.

Die Erfindung ist nachfolgend anhand eines in der Zeichnung dargestellten Ausführungsbeispiels näher erläutert. Es zeigen:
- Fig. 1: in stark vereinfachter perspektivischer Darstellung eine mehrstufige Inline-Kreiselpumpe mit angeschlossenem Motor,
- Fig. 2: einen Längsschnitt durch den Kopf des Pumpengehäuses mit Motorstuhl,
- Fig. 3: in stark vereinfachter Darstellung einen Längsschnitt durch die Gleitringpatronendichtung,
- Fig. 4: eine Seitenansicht der Gleitringpatronendichtung und
- Fig. 5: ein Schnitt längs der Schnittlinie V-V in Fig. 4.

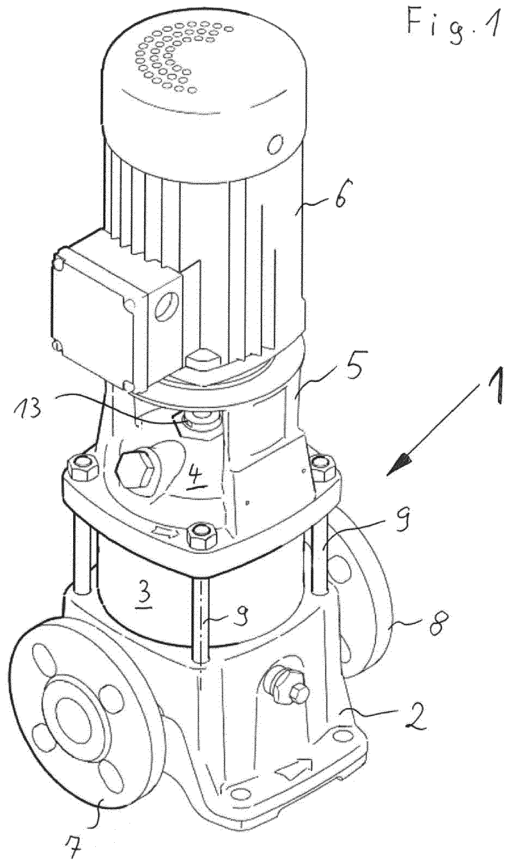

Bei der in Fig. 1 dargestellten Pumpe handelt es sich um eine mehrstufige Kreiselpumpe 1 der Inline-Bauart mit vertikaler, d. h. aufrechtstehender Drehachse. Die Pumpe weist in an sich bekannter Weise einen Fuß 2 auf, mit dem sie auf dem Boden steht und mit dem sie bodenseitig befestigt werden kann. Vom Pumpenfuß 2 erstreckt sich ein zylindrisches Mantelbauteil 3, das nach oben hin von einem Pumpenkopf 4 aufgenommen ist, der einen Motorstuhl 5 aufweist, auf dessen oberen Flansch ein Elektromotor 6 befestigt ist.

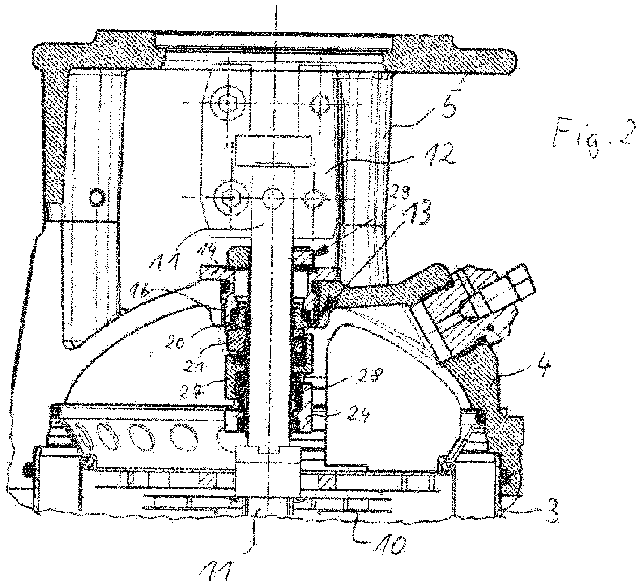

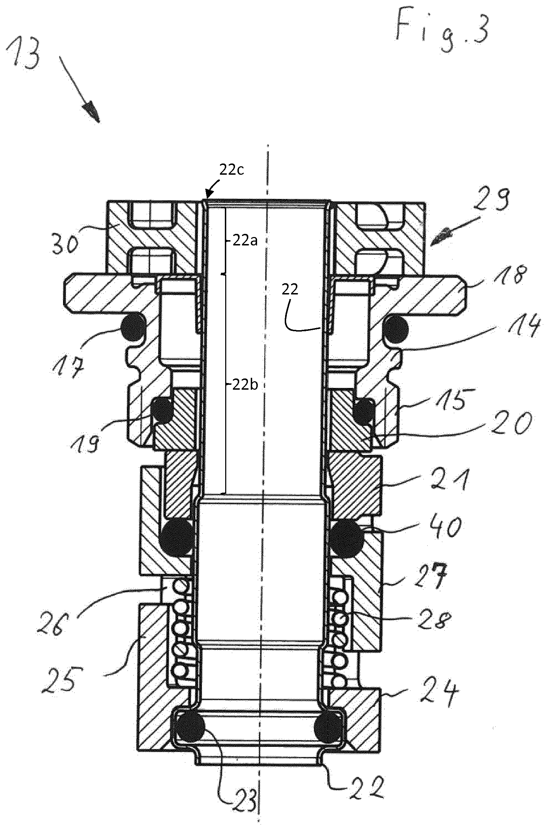

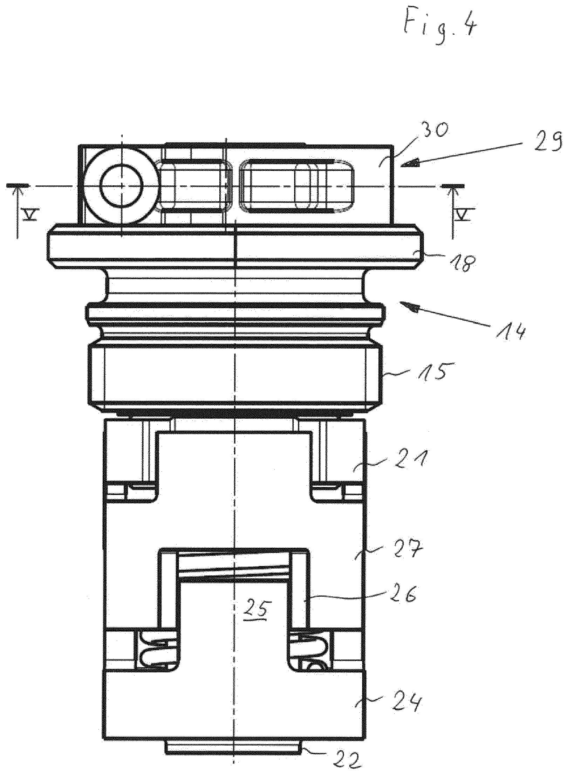

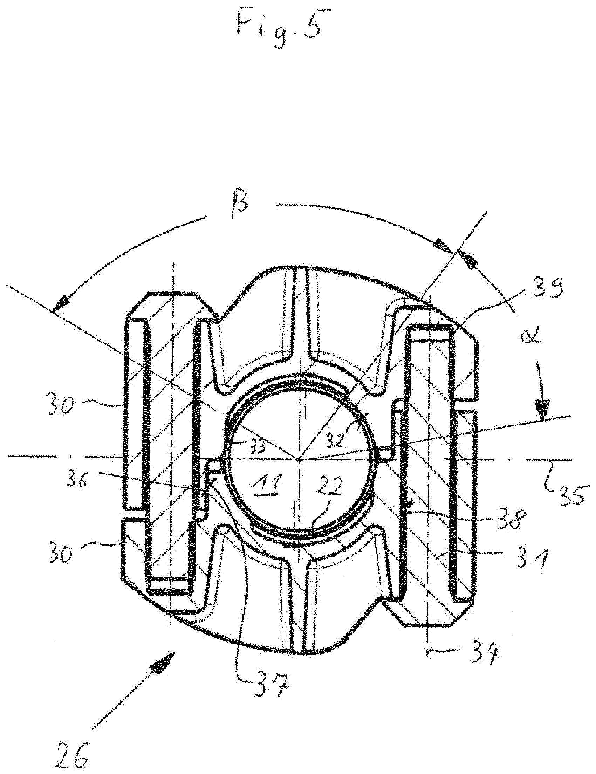

Der Fuß 2 weist einen ersten Anschlussflansch 7 einer Saugleitung auf sowie einen achsgleich auf der anderen Seite dazu angeordneten zweiten Anschlussflansch 8 einer Druckleitung. Innerhalb des Bereichs des Mantels 3 sind Pumpenstufen angeordnet, jeweils bestehend aus einem Kreiselrad 10 und einem daran anschließenden Leitapparat, sodass die durch die Saugleitung am ersten Anschlussflansch 7 in das Pumpengehäuse eintretende Flüssigkeit die Pumpenstufen unter Druckerhöhung von unten nach oben durchläuft, wobei der Ausgang der letzten Stufe über einen Ringkanal, dessen Innenwand durch die Außenwand der Leitapparate und dessen Außenwand durch den Mantel 3 gebildet ist, wieder in den Fuß 7 und dort zur Druckleitung am zweiten Anschlussflansch 8 geführt ist. Die Leitapparate sowie der Mantel 3 sind zwischen Pumpenkopf 4 und Pumpenfuß 2 mittels vier Zugankern 9 eingespannt. Die Kreiselräder 10, von denen das der letzten Pumpenstufe in Fig. 2 sichtbar ist, sitzen drehfest auf einer Welle 11, die im Bereich des Pumpenkopfes 4 aus dem Pumpengehäuse herausgeführt und dort mittels einer Kupplung 12 mit dem freien Wellenende des Elektromotors 6 verbunden ist. Die Wellendurchführung durch den Pumpenkopf 4 ist mittels einer Gleitringpatronendichtung 13 realisiert, deren Aufbau im Einzelnen aus den Figuren 3-5 ersichtlich ist.

Die Gleitringpatronendichtung 13 weist einen Träger 14 auf, der ringförmig ausgebildet ist und ein Außengewinde 15 aufweist, mit dem er in einem entsprechenden Innengewinde einer Öffnung 16 des Pumpengehäuses, insbesondere des Pumpenkopfes 4, unter Eingliederung eines O-Rings 17 festgelegt ist. Dabei liegt ein Flansch 18 des Trägers 14 an der Oberseite des Pumpenkopfes 4 die Öffnung 16 umgebend an. In diesem Träger 14 ist unter Eingliederung eines O-Rings 19 drehfest ein stationärer Gleitring 20 festgelegt, dessen Unterseite die eigentliche Gleit- und Axialdichtfläche bildet und an dem die Oberseite eines rotierenden Gleitrings 21 als Gegenfläche anliegt, welcher drehfest jedoch axial beweglich auf einer die Welle 11 im Bereich der Gehäuseöffnung 16 umgebenden Hülse 22 sitzt, welche drehfest mit der Welle 11 verbunden ist. Die Hülse 22 ist mittels eines O-Rings 23 gegenüber der Welle 11 abgedichtet, der O-Ring 23 sitzt innerhalb eines fest mit der Hülse 22 verbundenen Rings 24, welcher zwei diametral angeordnete Mitnehmer 25 aufweist, die sich von der Oberseite des Rings 24 nach oben erstrecken und im Eingriff mit entsprechenden Ausnehmungen 26 in einem Ring 27 sitzen, welcher drehfest mit dem rotierenden Gleitring 21 verbunden ist und diesen axial über eine zwischen den Ringen 24 und 27 angeordnete Schraubenfeder 28 abstützt. Zwischen dem rotierenden Gleitring 21, dem Ring 27 und der Hülse 22 ist ein O-Ring 40 eingegliedert, welcher axial an der der Gleitfläche abgewandten Seite des Gleitrings 21, sowie abgewandt gegenüberliegend in einer nach oben offenen nutartigen Ausnehmung des Rings 27 und radial innen an der Hülse 22 anliegt. Insoweit entspricht der Aufbau der Gleitringpatronendichtung 13 weitgehend bekannten Gleitringpatronendichtungen wie sie bei Grundfos Pumpen des Typs CR verbaut sind, auf die insoweit verwiesen wird.

Die gehäuseseitige Befestigung der Gleitringpatronendichtung 13 erfolgt mittels des Trägers 14. Die wellenseitige Befestigung der Hülse 22 erfolgt mittels einer Klemmvorrichtung 29, welche die Hülse 22 ringförmig umgreift und zwei identisch ausgebildete Klemmbauteile 30 aufweist, die mittels zweier Schrauben 31 miteinander verbunden und auf der Hülse 22 kraftschlüssig festgelegt sind. Dabei ist die Krafteinwirkung so hoch, dass die Hülse 22 im Bereich der Klemmvorrichtung 29 elastisch verformt und kraftschlüssig auf die Welle 11 gepresst wird, sodass ein Kraftschluss sowohl in axialer als auch in Drehrichtung erfolgt. Durch Anziehen der Schrauben 31 wird die Klemmvorrichtung 29 kraftschlüssig auf der Hülse 22 und diese kraftschlüssig auf der Welle 11 festgelegt.

Die Hülse 22 ragt in Fig. 3 mit einem oberen ersten axialen Abschnitt 22a aus dem Träger 15 heraus und ist nur in diesem oberen ersten axialen Abschnitt 22a von der Klemmvorrichtung 29 umgriffen. Ein unterer zweiter axialer Abschnitt 22b ist vom Träger 14 umgriffen. Um den Einsatz der Welle 11 zu erleichtern, weist das obere vom zweiten axialen Abschnitt 22b abgewandte Ende 22c des ersten axialen Abschnitts 22a der Hülse 22 eine etwas (z.B. 1-10%) aufgeweitete Innenkontur auf.

Die Klemmbauteile 30 weisen Klemmbacken 32 auf, die an die Außenkontur der Hülse 22 angepasst sind und an dieser anliegen. Diese Klemmbacken erstrecken sich über einen Winkel a des Umfangs der Hülse 22 von 43° und sind diametral zueinander angeordnet. In Umfangsrichtung gesehen schließt sich an eine Klemmbacke 32 eines Klemmbauteils 30 ein Bereich über einen Winkel β von 95° an, der beabstandet zur Hülse 22 ausgebildet ist, wonach sich eine weitere Anlagefläche 33 als Stützfläche anschließt, die sich jedoch nur über wenige Grad des Umfangs erstreckt. So ergibt sich für jedes Klemmbauteil 30 eine Umfangserstreckung von etwa 170°, sodass an den Enden jeweils ein Freiraum von einigen Grad verbleibt.

Über die Stützflächen 33 und die Klemmbacken 32 sind definierte Anlageflächen gebildet, die Kraftaufbringung erfolgt mittels der Schrauben 31, deren Längsachsen 34 senkrecht zu einer radialen Teilungsebene 35 und parallel zu Tangenten der Hülse 22 angeordnet sind.

Die Klemmbacken 32 und die Stützflächen 33 sind nahe der Teilungsebene 35 angeordnet und jede Klemmbacke 32 liegt abgewandt von der Gleitfläche 36 desselben Klemmbauteils 30. Die Gleitflächen 36 liegen tangential bzw. parallel dazu und parallel zu den Achsen 34 der Schrauben 31, sie stehen mit Gegengleitflächen 37 in Kontakt. Diese paarweise aneinander anliegenden Gleitflächen 36 und Gegengleitflächen 37 bilden Führungen und bestimmen die Richtung, mit denen die Klemmbauteile 30 zueinander bewegbar sind. Sie sorgen dafür, dass die Schrauben 31 weitgehend frei von Querkräften gehalten sind und bilden zusammen mit den Klemmbacken 32 in Querschnitt etwa keilförmige Gebilde, welche dafür sorgen, dass beim Aufeinanderzubewegen der Klemmbauteile 30, also beim Anziehen der Schrauben 31 Querkräfte auf die Hülse 22 erzeugt werden, die größer sind als die durch die Zugkraft der Schrauben 31 bedingten Längskräfte auf die Klemmbacken. Auf diese Weise ist sichergestellt, dass beim Anziehen der Schrauben 31 mit dem erforderlichen Drehmoment exakt die Klemmkraft aufgebracht wird, welche erforderlich ist, um die Hülse 22 kraftschlüssig auf der Welle 11 festzulegen. Diese Flächen 36, 37 können gegebenenfalls um wenige Grad geneigt sein, um die Klemmkräfte weiter zu erhöhen.

Alternativ, jedoch im Ausführungsbeispiel nicht dargestellt, können die Gleit- und Gegengleitflächen auch jeweils durch einen Zapfen und eine dazu als Gegenstück vorgesehene Ausnehmung gebildet sein, wobei dann je das Klemmbauteil auf der einen Seite einen Zapfen und auf der anderen Seite eine Ausnehmung aufweist, sodass jeweils eine Umfangsfläche des Zapfens eine Gleitfläche und eine Innenumfangsfläche der Ausnehmung eine Gegengleitfläche bilden.

In der dargestellten Ausführung ist die Klemmvorrichtung 29 durch zwei identische Klemmbauteile 30 und zwei Schrauben 31 gebildet, wobei die Schrauben mit ihrem Kopf an einer Kopfauflagefläche des Klemmbauteils 30 aufliegen, durch eine bohrungsähnliche Ausnehmung 38 geführt sind und in einem mit Innengewinde versehenen Sackloch 39 festgelegt sind. Zur Montage wird die Gleitringpatronendichtung 13 über das freie Ende der Welle 11 geschoben und durch Einschrauben des Trägers 14 in der Öffnung 16 des Pumpengehäuses festgelegt. Sodann wird die Klemmvorrichtung 29, nachdem die Klemmbauteile 30 mittels der Schrauben 31 locker miteinander verbunden worden sind, ebenfalls von oben über die Welle 11 geschoben, bis die Klemmvorrichtung 29 locker auf der Oberseite des Trägers 14 aufliegt. Sodann werden die Schrauben 31 gleichmäßig und mit einem vorbestimmten Drehmoment angezogen, wonach die Klemmvorrichtung 29 kraftschlüssig auf der Hülse 22 derart befestigt ist, dass die Hülse 22 elastisch zur Welle 11 hin verformt und dort ebenfalls kraftschlüssig festgelegt ist.

Nach Lösen der Schrauben 31 kann in umgekehrter Reihenfolge die Gleitringpatronendichtung 13 gegebenenfalls auch wieder entfernt werden. Da die Klemmvorrichtung 29 nur kraftschlüssig mit der Hülse 22 verbunden ist, kann die gesamte Gleitringpatronendichtung 13 auseinandergenommen und gegebenenfalls durch Austausch verschlissener Teile instand gesetzt. Da die Hülse 22 nur kraftschlüssig an der Welle 11 angelegen hat, ist die Oberfläche der Welle 11 hierdurch unversehrt geblieben, sodass der O-Ring 23, welcher die Hülse 22 gegenüber der Welle 11 abdichtet, weder bei der Demontage noch bei der Montage der Gleitringpatronendichtung 13 beschädigt werden kann.

### Bezugszeichenliste

- 1 -: Kreiselpumpe
- 2 -: Pumpenfuß
- 3 -: Mantel/Mantelbauteil
- 4 -: Pumpenkopf
- 5 -: Motorstuhl
- 6 -: Elektromotor
- 7 -: erster Anschlussflansch Saugleitung
- 8 -: zweiter Anschlussflansch Druckleitung
- 9 -: Zuganker
- 10 -: Kreiselräder
- 11 -: Welle
- 12 -: Kupplung
- 13 -: Gleitringpatronendichtung
- 14 -: Träger
- 15 -: Außengewinde
- 16 -: Öffnung im Pumpengehäuse
- 17 -: O-Ring
- 18 -: Flansch
- 19 -: O-Ring
- 20 -: Gleitring feststehend
- 21 -: Gleitring rotierend
- 22 -: Hülse
- 22a -: erster axialer Abschnitt der Hülse
- 22b -: zweiter axialer Abschnitt der Hülse
- 22c -: Ende des ersten axialen Abschnitts der Hülse
- 23 -: O-Ring
- 24 -: Ring
- 25 -: Mitnehmer
- 26 -: Ausnehmungen
- 27 -: Ring
- 28 -: Schraubenfeder
- 29 -: Klemmvorrichtung
- 30 -: Klemmbauteile
- 31 -: Schrauben
- 32 -: Klemmbacken
- a -: Winkel über den sich die Klemmbacken erstrecken
- β -: Winkel zwischen Klemmbacke und weiterer Anlagefläche
- 33 -: weitere Anlagefläche, Stützfläche
- 34 -: Längsachse von 31
- 35 -: Teilungsebene
- 36 -: Gleitflächen/Führungsflächen
- 37 -: Gegengleitflächen/Gegenführungsflächen
- 38 -: Ausnehmung
- 39 -: Sackloch
- 40 -: O-Ring

## Patentansprüche

1. Ein- oder mehrstufige Kreiselpumpe mit einem Pumpengehäuse (2-5) und mit einer drehbar darin angeordneten Welle (11), mit mindestens einem drehfest auf der Welle (11) angeordneten Kreiselrad (10) zur Flüssigkeitsförderung, mit einer Gleitringpatronendichtung (13), die zwischen der Welle (11) und einer Öffnung (16) des Gehäuses (2-5), durch welche die Welle (11) hindurchgeführt ist, angeordnet ist, wobei die Gleitringpatronendichtung (13) eine Hülse (22) aufweist, welche die Welle (11) zumindest im Bereich der Öffnung (16) umgibt und die mittels einer an der Außenseite der Hülse (22) angeordneten Klemmvorrichtung (29) über Klemmmittel (32) lösbar und drehfest mit der Welle (11) verbunden ist, wobei das oder die Klemmmittel (32) der Klemmvorrichtung (29) nur an der Außenseite der Hülse (22) angreifen, derart, dass die Hülse (22) nur kraftschlüssig mit der Welle (11) verbunden ist, **dadurch gekennzeichnet, dass** die Klemmvorrichtung (29) mindestens zwei, die Hülse (22) abschnittsweise umgebende Klemmbauteile (30) aufweist, die über Schrauben (31) derart miteinander verbunden sind, dass durch Anziehen der Schrauben (31) über die Klemmbauteile (30) auf die Hülse (22) wirkende Klemmkräfte aufgebracht werden, wobei jedes Klemmbauteil (30) mindestens eine zur Anlage an der Hülse (22) bestimmte Klemmbacke (32) aufweist.

2. Kreiselpumpe nach Anspruch 1, **dadurch gekennzeichnet, dass** die Klemmvorrichtung (29) lösbar mit der Hülse (22) verbunden ist.

3. Kreiselpumpe nach Anspruch 1 oder 2, **dadurch gekennzeichnet, dass** die Schrauben (31) vorzugsweise tangential oder parallel zu den Klemmbauteilen angeordnet sind.

4. Kreiselpumpe nach Anspruch 3, **dadurch gekennzeichnet, dass** eine Schraube (31), welche zwei benachbarte Klemmbauteile (30) miteinander verbindet, senkrecht zur einer vorzugsweise radialen Teilungsebene (35) der zu verbindenden Klemmbauteile (30) angeordnet ist.

5. Kreiselpumpe nach einem der vorhergehenden Ansprüche, **dadurch gekennzeichnet, dass** die vorzugsweise zwei Klemmbauteile (30) identisch ausgebildet sind.

6. Kreiselpumpe nach einem der vorhergehenden Ansprüche, **dadurch gekennzeichnet, dass** eine Klemmbacke (32) an die Außenkontur der Hülse (22) und/oder der Welle (11) angepasst ist.

7. Kreiselpumpe nach Anspruch 6, **dadurch gekennzeichnet, dass** die Hülse (22) durch die Klemmbacke (32) zumindest teilweise verformbar ist, sodass sich die Innenkontur der Hülse (22) zumindest teilweise an die Außenkontur der Welle (11) anschmiegt.

8. Kreiselpumpe nach einem der vorhergehenden Ansprüche, **dadurch gekennzeichnet, dass** die Hülse (22) einen ersten axialen Abschnitt (22a) und einen zweiten axialen Abschnitt (22b) aufweist, wobei die Klemmmittel (32) der Klemmvorrichtung (29) nur an der Außenseite des ersten axialen Abschnitts (22a) der Hülse (22) angreifen.

9. Kreiselpumpe nach einem der vorhergehenden Ansprüche, **dadurch gekennzeichnet, dass** jedes Klemmbauteil (30) eine von der Hülse (22) beabstandete Führungsfläche (36) hat, die mit einer am benachbarten Klemmbauteil (30) angeordneten Gegenführungsfläche (37) in Wirkverbindung steht, wobei die Führungsflächen (36, 37) in einer Ebene liegen, die parallel zur Mittellängsachse (34) der nächst benachbarten Schraube (31) und/oder parallel zu einer Tangente zur Hülse (22) oder in einem spitzen Winkel, vorzugsweise in einem Winkel von bis zu 5° dazu liegt.

10. Kreiselpumpe nach Anspruch 9, **dadurch gekennzeichnet, dass** die Führungsflächen (36) und die Gegenführungsflächen (37) jeweils zwischen einer zwei Klemmbauteile (30) miteinander verbindenden Schraube (31) und dem Außenumfang der Hülse (22) angeordnet sind.

11. Kreiselpumpe nach Anspruch 9 oder 10, **dadurch gekennzeichnet, dass** eine Führungsfläche und eine Gegenführungsfläche an einem Führungszapfen und einer den Zapfen aufnehmenden Ausnehmung gebildet sind.

12. Kreiselpumpe nach einem der vorhergehenden Ansprüche, **dadurch gekennzeichnet, dass** sich eine Klemmbacke (32) über einen Umfangswinkel (a) der Hülse (22) zwischen 30° und 50°, vorzugsweise zwischen 40° und 45° erstreckt.

13. Kreiselpumpe nach einem der vorhergehenden Ansprüche, **dadurch gekennzeichnet, dass** ein Klemmbauteil (30) eine weitere Anlagefläche (33) aufweist, die zur Anlage des Klemmbauteils (30) auf der Hülse (22) vorgesehen ist und welche umfangsmäßig beabstandet von der Klemmbacke (32) ist.

14. Kreiselpumpe nach Anspruch 13, **dadurch gekennzeichnet, dass** zwischen der Klemmbacke (32) und der weiteren Anlagefläche (33) das Klemmbauteil (30) einen von der Hülse (22) beabstandeten Bereich aufweist, der sich über einen Winkelbereich (β) zwischen 80° und 110° erstreckt.

15. Kreiselpumpe nach einem der vorhergehenden Ansprüche, **dadurch gekennzeichnet, dass** die mindestens eine Anlagefläche einer Klemmbacke (32) einer Führungsfläche (36) desselben Klemmbauteils (30) benachbart und von dieser abgewandt angeordnet ist.

16. Kreiselpumpe nach einem der vorhergehenden Ansprüche, **dadurch gekennzeichnet, dass** die Anordnung der Klemmbacken (32) umfangsmäßig so erfolgt, dass die auf die Hülse (22) wirkenden Klemmkräfte in Querrichtung zu der Längsachse (34) der verbindenden Schraube (31) größer als die in Längsrichtung oder parallel zur Schraube (31) gerichteten Klemmkräfte sind.

17. Gleitringpatronendichtung für eine Kreiselpumpe nach einem der vorhergehenden Ansprüche, mit einem ersten Gleitring (20), der zur drehfesten Anordnung nahe einer Gehäuseöffnung (16) eines Pumpengehäuses (2-5) vorgesehen ist und der eine axiale Gleit- und Dichtfläche aufweist, die an einer axialen Gleit- und Dichtfläche eines zweiten Gleitrings (21) anliegt, der zur drehfesten Anordnung an einer die Gehäuseöffnung (16) durchsetzenden Welle (11) vorgesehen ist, mit einer Hülse (22) und mit einer an der Hülse (22) angeordneten Klemmvorrichtung (29) mit Klemmmitteln (32), mit Federmitteln (28) zur axialen Kraftbeaufschlagung der Gleit- und Dichtflächen zueinander sowie mit Dichtmitteln (17, 19, 23), wobei das oder die Klemmmittel (32) der Klemmvorrichtung (29) nur an der Außenseite der Hülse (22) angreifen, derart, dass die Hülse (22) nur kraftschlüssig mit der Welle (11) verbunden wird, **dadurch gekennzeichnet, dass** die Klemmvorrichtung (29) mindestens zwei, die Hülse (22) abschnittsweise umgebende Klemmbauteile (30) aufweist, die über Schrauben (31) derart miteinander verbunden sind, dass durch Anziehen der Schrauben (31) über die Klemmbauteile (30) auf die Hülse (22) wirkende Klemmkräfte aufgebracht werden, wobei jedes Klemmbauteil (30) mindestens eine zur Anlage an der Hülse (22) bestimmte Klemmbacke (32) aufweist.

18. Gleitringpatronendichtung nach Anspruch 17 mit Merkmalen gemäß einem oder mehreren der Ansprüche 2 bis 16.

## Claims

1. A single-stage or multistage centrifugal pump having a pump housing (2-5) and having a shaft (11) which is arranged therein in a rotatable manner, having at least one gyro wheel (10), which is arranged on the shaft (11) in a rotationally fixed manner, for liquid delivery, having a cartridge mechanical seal (13), which is arranged between the shaft (11) and an opening (16) of the housing (2-5), through which opening the shaft (11) is guided, the cartridge mechanical seal (13) having a sleeve (22), which surrounds the shaft (11) at least in the region of the opening (16) and which is connected to the shaft (11) in a detachable and rotationally fixed manner via clamping means (32) by means of a clamping device (29) which is arranged on the outer side of the sleeve (22), the clamping means (32) of the clamping device (29) act(s) only on the outer side of the sleeve (22) in such a manner that the sleeve (22) is connected to the shaft (11) only in a non-positive manner, **characterized in that** the clamping device (29) has at least two clamping components (30) which surround the sleeve (22) in sections and which are connected to one another via screws (31) in such a manner that by tightening the screws (31), clamping forces acting on the sleeve (22) are applied via the clamping components (30), wherein each clamping component (30) has at least one clamping jaw (32) which is intended for bearing against the sleeve (22).

2. The centrifugal pump according to claim 1, **characterized in that** the clamping device (29) is connected to the sleeve (22) in a detachable manner.

3. The centrifugal pump according to claim 1 or 2, **characterized in that** the screws (31) are preferably arranged tangentially or parallel to the clamping components.

4. The centrifugal pump according to claim 3, **characterized in that** a screw (31) which connects two adjacent clamping components (30) to one another is arranged perpendicularly to a preferably radial plane of separation (35) of the clamping components (30) to be connected.

5. The centrifugal pump according to one of the preceding claims, **characterized in that** the preferably two clamping components (30) are constructed identically.

6. The centrifugal pump according to one of the preceding claims, **characterized in that** a clamping jaw (32) is adapted to the outer contour of the sleeve (22) and/or the shaft (11).

7. The centrifugal pump according to claim 6, **characterized in that** the sleeve (22) is at least partially deformable by the clamping jaw (32), so that the inner contour of the sleeve (22) conforms at least partially to the outer contour of the shaft (11).

8. The centrifugal pump according to one of the preceding claims, **characterized in that** the sleeve (22) has a first axial section (22a) and a second axial section (22b), wherein the clamping means (32) of the clamping device (29) act only on the outer side of the first axial section (22a) of the sleeve (22).

9. The centrifugal pump according to one of the preceding claims, **characterized in that** each clamping component (30) has a guide surface (36) which is spaced from the sleeve (22), which guide surface is in operative connection with a mating guide surface (37) arranged on the adjacent clamping component (30), wherein the guide surfaces (36, 37) lie in a plane which lies parallel to the central longitudinal axis (34) of the next adjacent screw (31) and/or parallel to a tangent to the sleeve (22) or at an acute angle, preferably at an angle of up to 5°, thereto.

10. The centrifugal pump according to claim 9, **characterized in that** the guide surfaces (36) and the mating guide surfaces (37) are in each case arranged between a screw (31), which connects two clamping components (30) to one another, and the outer circumference of the sleeve (22).

11. The centrifugal pump according to claim 9 or 10, **characterized in that** a guide surface and a mating guide surface are formed on a guide pin and a recess which accommodates the pin.

12. The centrifugal pump according to one of the preceding claims, **characterized in that** a clamping jaw (32) extends over an angle at circumference (a) of the sleeve (22) of between 30° and 50°, preferably between 40° and 45°.

13. The centrifugal pump according to one of the preceding claims, **characterized in that** a clamping component (30) has a further bearing surface (33), which is provided for the bearing of the clamping component (30) on the sleeve (22) and which is circumferentially spaced from the clamping jaw (32).

14. The centrifugal pump according to claim 13, **characterized in that** between the clamping jaw (32) and the further bearing surface (33), the clamping component (30) has a region, which is spaced from the sleeve (22), which region extends over an angular range (β) of between 80° and 110°.

15. The centrifugal pump according to one of the preceding claims, **characterized in that** the at least one bearing surface of a clamping jaw (32) is adjacent to a guide surface (36) of the same clamping component (30) and is arranged facing away from the same.

16. The centrifugal pump according to one of the preceding claims, **characterized in that** the arrangement of the clamping jaws (32) takes place circumferentially such that the clamping forces acting on the sleeve (22) in the transverse direction to the longitudinal direction (34) of the connecting screw (31) are larger than the clamping forces directed in the longitudinal direction or parallel to the screw (31).

17. A cartridge mechanical seal for a centrifugal pump according to one of the preceding claims, having a first face seal ring (20), which is provided for rotationally fixed arrangement close to a housing opening (16) of a pump housing (2-5) and which has an axial sliding and sealing surface, which bears against an axial sliding and sealing surface of a second face seal ring (21), which is provided for rotationally fixed arrangement on a shaft (11) which passes through the housing opening (16), having a sleeve (22) and having a clamping device (29) with clamping means (32), which is arranged on the sleeve (22), having spring means (28) for axially applying force to the sliding and sealing surfaces with respect to one another and also having sealing means (17, 19, 23), the clamping means (32) of the clamping device (29) acting only on the outer side of the sleeve (22) in such a manner that the sleeve (22) is connected to the shaft (11) only in a non-positive manner, **characterized in that** the clamping device (29) has at least two clamping components (30), which surround the sleeve (22) in sections and which are connected to one another via screws (31) in such a manner that by tightening the screws (31), clamping forces acting on the sleeve (22) are applied via the clamping components (30), wherein each clamping component (30) has at least one clamping jaw (32) which is intended for bearing against the sleeve (22).

18. The cartridge mechanical seal according to claim 17, having features according to one or more of claims 2 to 16.

## Revendications

1. Pompe centrifuge à un ou plusieurs étage(s) avec un carter de pompe (2 à 5) et un arbre (11) agencé de manière rotative dans celui-ci, avec au moins une roue centrifuge (10) agencée de manière solidaire en rotation sur l'arbre (11) pour le transport de liquide, avec une garniture mécanique à cartouche (13) agencée entre l'arbre (11) et un orifice (16), à travers lequel l'arbre (11) passe, du carter (2 à 5), la garniture mécanique à cartouche (13) comprenant un manchon (22) qui entoure l'arbre (11) au moins dans la région de l'orifice (16) et qui est relié de manière amovible et solidaire en rotation à l'arbre (11) moyennant un dispositif de serrage (29) agencé sur la face extérieure du manchon (22) et par l'intermédiaire de moyens de serrage (32), le ou les moyen(s) de serrage (32) du dispositif de serrage (29) ne venant en prise qu'à la face extérieure du manchon (22), de telle manière que le manchon (22) ne soit relié à l'arbre (11) que par complémentarité de force, **caractérisée en ce que** le dispositif de serrage (29) comprend au moins deux composants de serrage (30) entourant le manchon (22) par sections et reliés les uns aux autres par l'intermédiaire de vis (31) de telle manière que des forces de serrage agissant sur le manchon (22) par l'intermédiaire des composants de serrage (30) soient appliquées par serrage des vis (31), chaque composant de serrage (30) comprenant au moins une mâchoire de serrage (32) destinée à être mise en en appui sur le manchon (22).

2. Pompe centrifuge selon la revendication 1, **caractérisée en ce que** le dispositif de serrage (29) est relié de manière amovible au manchon (22).

3. Pompe centrifuge selon la revendication 1 ou 2, **caractérisée en ce que** les vis (31) sont agencées de manière préférée tangentiellement ou parallèlement aux composants de serrage.

4. Pompe centrifuge selon la revendication 3, **caractérisée en ce qu'**une vis (31) reliant l'un à l'autre deux composants de serrage (30) voisins est agencée perpendiculairement à un plan de division (35), de manière préférée radial, des composants de serrage (30) à relier.

5. Pompe centrifuge selon l'une quelconque des revendications précédentes, **caractérisée en ce que** les, de manière préférée deux, composants de serrage (30) sont réalisés de manière identique.

6. Pompe centrifuge selon l'une quelconque des revendications précédentes, **caractérisée en ce qu'**une mâchoire de serrage (32) est adaptée au contour extérieur du manchon (22) et/ou de l'arbre (11).

7. Pompe centrifuge selon la revendication 6, **caractérisée en ce que** le manchon (22) peut être au moins partiellement déformé par la mâchoire de serrage (32), de sorte que le contour intérieur du manchon (22) épouse au moins partiellement le contour extérieur de l'arbre (11).

8. Pompe centrifuge selon l'une quelconque des revendications précédentes, **caractérisée en ce que** le manchon (22) comprend une première section axiale (22a) et une seconde section axiale (22b), les moyens de serrage (32) du dispositif de serrage (29) ne venant en prise qu'à la face extérieure de la première section axiale (22a) du manchon (22).

9. Pompe centrifuge selon l'une quelconque des revendications précédentes, **caractérisée en ce que** chaque composant de serrage (30) comprend une surface de guidage (36) espacée par rapport au manchon (22) et en liaison active avec une surface de contre-guidage (37) agencée sur le composant de serrage (30) voisin, les surfaces de guidage (36, 37) se trouvant dans un plan parallèle à l'axe longitudinal médian (34) de la vis (31) voisine la plus proche et/ou parallèle à une tangente au manchon (22) ou ayant un angle aigu, de manière préférée un angle allant jusqu'à 5°, par rapport à celle-ci.

10. Pompe centrifuge selon la revendication 9, **caractérisée en ce que** les surfaces de guidage (36) et les surfaces de contre-guidage (37) sont agencées respectivement entre une vis (31) reliant deux composants de serrage (30), et la périphérie extérieure du manchon (22).

11. Pompe centrifuge selon la revendication 9 ou 10, **caractérisée en ce qu'**une surface de guidage et une surface de contre-guidage sont formées sur une cheville de guidage et un évidement accueillant la cheville.

12. Pompe centrifuge selon l'une quelconque des revendications précédentes, **caractérisée en ce qu'**une mâchoire de serrage (32) s'étend sur un angle inscrit (a) du manchon (22) compris entre 30° et 50°, de manière préférée compris entre 40° et 45°.

13. Pompe centrifuge selon l'une quelconque des revendications précédentes, **caractérisée en ce qu'**un composant de serrage (30) comprend une surface de mise en place (33) supplémentaire destinée à la mise en place du composant de serrage (30) sur le manchon (22) et périphériquement espacée par rapport à la mâchoire de serrage (32).

14. Pompe centrifuge selon la revendication 13, **caractérisée en ce que** le composant de serrage (30) comprend entre la mâchoire de serrage (32) et la surface de mise en place (33) supplémentaire une région espacée par rapport au manchon (22) et s'étendant sur une plage angulaire (β) comprise entre 80° et 110°.

15. Pompe centrifuge selon l'une quelconque des revendications précédentes, **caractérisée en ce que** ladite au moins une surface de mise en place d'une mâchoire de serrage (32) est agencée au voisinage d'une surface de guidage (36) du même composant de serrage (30) et en s'en détournant.

16. Pompe centrifuge selon l'une quelconque des revendications précédentes, **caractérisée en ce que** l'agencement des mâchoires de serrage (32) est réalisé de manière périphérique de sorte que les forces de serrage agissant sur le manchon (22) dans la direction transversale à l'axe longitudinal (34) de la vis de liaison (31) soient supérieures aux forces de serrage orientées dans la direction longitudinale ou parallèlement à la vis (31).

17. Garniture mécanique à cartouche pour une pompe centrifuge selon l'une quelconque des revendications précédentes, avec une première bague de glissement (20) destinée à être agencée de manière solidaire en rotation à proximité d'un orifice de carter (16) d'un carter de pompe (2 à 5) et comprenant une surface axiale de glissement et d'étanchéité qui repose sur une surface axiale de glissement et d'étanchéité d'une seconde bague de glissement (21) destinée à être agencée de manière solidaire en rotation sur un arbre (11) traversant l'orifice de carter (16), avec un manchon (22) et avec un dispositif de serrage (29) agencé sur le manchon (22) avec des moyens de serrage (32), avec des moyens de ressort (28) permettant l'exercice axial réciproque de forces entre les surfaces de glissement et d'étanchéité, ainsi qu'avec des moyens d'étanchéité (17, 19, 23), le ou les moyen(s) de serrage (32) du dispositif de serrage (29) ne venant en prise qu'à la face extérieure du manchon (22), de telle manière que le manchon (22) ne soit relié à l'arbre (11) que par complémentarité de force, **caractérisé en ce que** le dispositif de serrage (29) comprend au moins deux composants de serrage (30) entourant le manchon (22) par sections et reliés entre eux par des vis (31) de telle manière que des forces de serrage agissant sur le manchon (22) par l'intermédiaire des composants de serrage (30) soient appliquées par serrage des vis (31), chaque composant de serrage (30) comprenant au moins une mâchoire de serrage (32) destinée à venir en place sur le manchon (22).

18. Garniture mécanique à cartouche selon la revendication 17, ayant des caractéristiques selon l'une quelconque ou plusieurs des revendications 2 à 16.
